# EUROPEAN PATENT APPLICATION

(11) **EP 4 037 323 A1**
(43) Date of publication of application: **03.08.2022**
(21) Application number: 19947119.4
(22) Date of filing: 24.09.2019
(51) Int. Cl.: H04N 21/232, H04N 21/422, G10L 15/26, G06F 16/70

(54) **ARTIFICIAL INTELLIGENCE SERVER AND OPERATION METHOD THEREOF**

(71) Applicant: LG Electronics Inc., SEOUL 07336 (KR)
(72) Inventor: KIM, Taejoon, Seoul 06772 (KR); MIN, Sunki, Seoul 06772 (KR)
(74) Representative: Katérle, Axel
(86) International application number: PCT/KR2019/012393
(87) International publication number: WO 2021/060575

(57) **Abstract**

An artificial intelligence server according to an embodiment of the present disclosure includes a communication unit configured to perform communication with a display device, a database storing a plurality of program names, and a processor configured to receive, from the display device, voice data corresponding to a voice command uttered by a user, convert the received voice data into text data, acquire a plurality of named entities from the converted text data, determine whether a program name matching one of the plurality of named entities among the plurality of program names stored in the database exists, and when the program name matching the named entity does not exist, search for the program name matching the named entity through a web.

## Description

### [TECHNICAL FIELD]

The present disclosure relates to an artificial intelligence server capable of analyzing an intent of a user's utterance.

### [BACKGROUND ART]

Digital TV services using wired or wireless communication networks are becoming common. Digital TV services are capable of providing various services that could not be provided by the existing analog broadcasting services.

For example, Internet Protocol Television (IPTV) and smart TV services, which are types of digital TV services, provide interactivity so that users can actively select the types of watching programs, the watching time, and the like. The IPTV and smart TV services can provide various additional services, such as Internet search, home shopping, and online games, based on such interactivity.

In addition, recent TVs can recognize a voice uttered by a user and provide a voice recognition service that matches the intent of the recognized voice.

When a user utters a voice requesting a search for a specific program, the user can utter the voice while inserting the abbreviation or alias of the program.

However, it is impossible to recognize the abbreviation or the program or the alias of the program rather than the full name of the program, causing inconvenience to the voice recognition service.

### [DISCLOSURE OF INVENTION]

### [TECHNICAL PROBLEM]

The present disclosure aims to increase a recognition rate of a user's spoken word when an abbreviation or an alias of a program that cannot be recognized is included therein.

### [TECHNICAL SOLUTION]

An artificial intelligence server according to an embodiment of the present disclosure includes a communication unit configured to perform communication with a display device, a database storing a plurality of program names, and a processor configured to receive, from the display device, voice data corresponding to a voice command uttered by a user, convert the received voice data into text data, acquire a plurality of named entities from the converted text data, determine whether a program name matching one of the plurality of named entities among the plurality of program names stored in the database exists, and when the program name matching the named entity does not exist, search for the program name matching the named entity through a web.

An operating method of an artificial intelligence server according to an embodiment of the present disclosure includes storing a plurality of program names in a database, receiving, from a display device, voice data corresponding to a voice command uttered by a user, converting the received voice data into text data, acquiring a plurality of named entities from the converted text data, determining whether a program name matching one of the plurality of named entities exists among the plurality of program names stored in the database, and when the program name matching the named entity does not exist, searching for the program name matching the named entity through a web.

### [ADVANTAGEOUS EFFECTS]

According to an embodiment of the present disclosure, when a user searches for a program through voice, an accurate program search result can be provided to the user only by utterance including the abbreviation or alias of the program.

Accordingly, the recognition rate of the spoken word including the abbreviation or alias can be greatly improved.

### [BRIEF DESCRIPTION OF DRAWINGS]

Fig. 1 is a block diagram illustrating a configuration of a display device according to an embodiment of the present disclosure.
Fig. 2 is a block diagram illustrating a remote control device according to an embodiment of the present disclosure.
Fig. 3 is a view illustrating an actual configuration of a remote control device according to an embodiment of the present disclosure.
Fig. 4 is a view illustrating an example of utilizing a remote control device according to an embodiment of the present disclosure.
Fig. 5 is a block diagram for describing a configuration of an artificial intelligence (AI) server according to an embodiment of the present disclosure.
Fig. 6 is a ladder diagram for describing an operating method of a voice recognition system according to an embodiment of the present disclosure.
Figs. 7 and 8 are views for describing a process of recognizing a program name from a voice command uttered by a user and performing an intent analysis result of the voice command, according to an embodiment of the present disclosure.
Figs. 9 and 10 are views for describing an operation of a natural language processing model according to an embodiment of the present disclosure.
Fig. 11 is a flowchart for describing an operating method of a display device according to an embodiment of the present disclosure.

### [BEST MODE FOR CARRYING OUT THE INVENTION]

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure, for example, as an artificial display device that adds a computer supporting function to a broadcast receiving function, can have an easy-to-use interface such as a writing input device, a touch screen, or a spatial remote control device as an Internet function is added while fulfilling the broadcast receiving function. Then, with the support of a wired or wireless Internet function, it is possible to perform an e-mail, web browsing, banking, or game function in access to Internet and computers. In order to perform such various functions, standardized general purpose OS can be used.

Accordingly, since various applications are freely added or deleted on a general purpose OS kernel, a display device described herein, for example, can perform various user-friendly functions. The display device, in more detail, can be a network TV, Hybrid Broadcast Broadband TV (HBBTV), smart TV, light-emitting diode (LED) TV, organic light-emitting diode (OLED) TV, and so on and in some cases, can be applied to a smartphone.

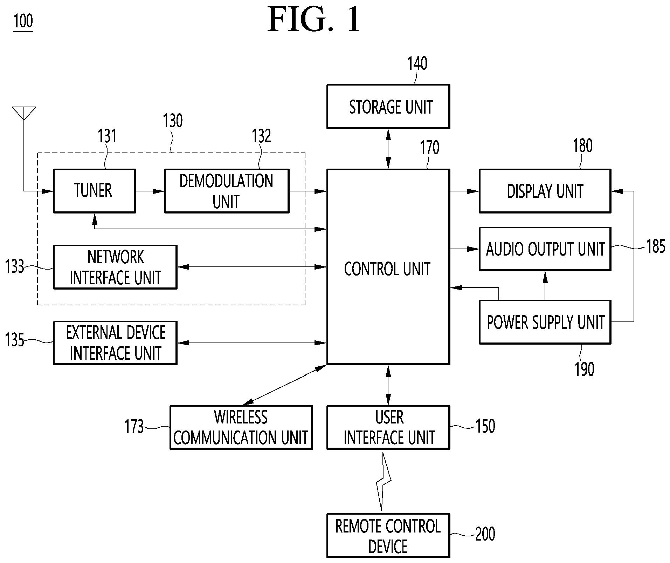

Fig. 1 is a block diagram illustrating a configuration of a display device according to an embodiment of the present disclosure.

Referring to Fig. 1, a display device 100 can include a broadcast reception unit 130, an external device interface unit 135, a storage unit 140, a user interface unit 150, a control unit 170, a wireless communication unit 173, a display unit 180, an audio output unit 185, and a power supply unit 190.

The broadcast reception unit 130 can include a tuner 131, a demodulation unit 132, and a network interface unit 133.

The tuner 131 can select a specific broadcast channel according to a channel selection command. The tuner 131 can receive broadcast signals for the selected specific broadcast channel.

The demodulation unit 132 can divide the received broadcast signals into video signals, audio signals, and broadcast program-related data signals, and can restore the divided video signals, audio signals, and data signals into an output available form.

The external device interface unit 135 can receive an application or an application list in an adjacent external device, and can transmit the application or the application list to the control unit 170 or the storage unit 140.

The external device interface unit 135 can provide a connection path between the display device 100 and the external device. The external device interface unit 135 can receive at least one of an image or audio output from the external device that is wirelessly or wiredly connected to the display device 100, and can transmit the image and/or the audio to the control unit 170. The external device interface unit 135 can include a plurality of external input terminals. The plurality of external input terminals can include an RGB terminal, at least one High Definition Multimedia Interface (HDMI) terminal, and a component terminal.

An image signal of the external device input through the external device interface unit 135 can be output through the display unit 180. A voice signal of the external device input through the external device interface unit 135 can be output through the audio output unit 185.

An external device connectable to the external device interface unit 135 can be one of a set-top box, a Blu-ray player, a DVD player, a game console, a sound bar, a smartphone, a PC, a USB memory, and a home theater system, but this is just exemplary.

The network interface unit 133 can provide an interface for connecting the display device 100 to a wired/wireless network including an Internet network. The network interface unit 133 can transmit or receive data to or from another user or another electronic device through an accessed network or another network linked to the accessed network.

In addition, some content data stored in the display device 100 can be transmitted to a user or an electronic device, which is selected from other users or other electronic devices preregistered in the display device 100.

The network interface unit 133 can access a predetermined webpage through an accessed network or another network linked to the accessed network. That is, the network interface unit 133 can transmit or receive data to or from a corresponding server by accessing a predetermined webpage through the network.

The network interface unit 133 can receive content or data provided from a content provider or a network operator. That is, the network interface unit 133 can receive content, such as movies, advertisements, games, VODs, and broadcast signals, which are provided from the content provider or the network operator, and information relating thereto through the network.

In addition, the network interface unit 133 can receive firmware update information and update files provided from the network operator, and can transmit data to the Internet or content provider or the network operator.

The network interface unit 133 can select and receive a desired application among applications open to the air, through the network.

The storage unit 140 can store signal-processed image, voice, or data signals stored by a program in order for each signal processing and control in the control unit 170.

In addition, the storage unit 140 can perform a function for temporarily storing image, voice, or data signals output from the external device interface unit 135 or the network interface unit 133, and can store information on a predetermined image through a channel memory function.

The storage unit 140 can store an application or an application list input from the external device interface unit 135 or the network interface unit 133.

The display device 100 can play content files (e.g., video files, still image files, music files, document files, application files, etc.) stored in the storage unit 140, and can provide the content files to a user.

The user input unit 150 can transmit signals input by a user to the control unit 170, or can transmit signals from the control unit 170 to a user. For example, the user input unit 150 can receive or process control signals such as power on/off, channel selection, and screen setting from the remote control device 200 or transmit control signals from the control unit 170 to the remote control device 200 according to various communication methods such as Bluetooth, Ultra Wideband (WB), ZigBee, Radio Frequency (RF), and IR communication methods.

In addition, the user input unit 150 can transmit, to the control unit 170, control signals input from local keys (not shown) such as a power key, a channel key, a volume key, and a setting key.

Image signals that are image-processed by the control unit 170 can be input to the display unit 180 and displayed as images corresponding to the image signals. In addition, image signals that are image-processed by the control unit 170 can be input to an external output device through the external device interface unit 135.

Voice signals processed by the control unit 170 can be output to the audio output unit 185. In addition, voice signals processed by the control unit 170 can be input to the external output device through the external device interface unit 135.

Additionally, the control unit 170 can control overall operations of the display device 100.

In addition, the control unit 170 can control the display device 100 by a user command or an internal program input through the user input unit 150, and can access the network to download a desired application or application list into the display device 100.

The control unit 170 can output channel information selected by a user together with the processed image or voice signals through the display unit 180 or the audio output unit 185.

In addition, the control unit 170 can output image signals or voice signals of an external device such as a camera or a camcorder, which are input through the external device interface unit 135, through the display unit 180 or the audio output unit 185, according to an external device image playback command received through the user input unit 150.

Moreover, the control unit 170 can control the display unit 180 to display images, and can control the display unit 180 to display broadcast images input through the tuner 131, external input images input through the external device interface unit 135, images input through the network interface unit, or images stored in the storage unit 140. In this case, an image displayed on the display unit 180 can be a still image or video and also can be a 2D image or a 3D image.

Additionally, the control unit 170 can play content stored in the display device 100, received broadcast content, and external input content input from the outside, and the content can be in various formats such as broadcast images, external input images, audio files, still images, accessed web screens, and document files.

Moreover, the wireless communication unit 173 can perform wired or wireless communication with an external device. The wireless communication unit 173 can perform short-range communication with an external device. For this, the wireless communication unit 173 can support short-range communication by using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication unit 173 can support wireless communication between the display device 100 and a wireless communication system, between the display device 100 and another display device 100, or between networks including the display device 100 and another display device 100 (or an external server) through wireless area networks. The wireless area networks can be wireless personal area networks.

Herein, the other display device 100 can be a mobile terminal such as a wearable device (for example, a smart watch, a smart glass, and a head mounted display (HMD)) or a smartphone, which is capable of exchanging data (or inter-working) with the display device 100. The wireless communication unit 173 can detect (or recognize) a wearable device capable of communication around the display device 100. Furthermore, if the detected wearable device is a device authenticated to communicate with the display device 100, the control unit 170 can transmit at least part of data processed in the display device 100 to the wearable device through the wireless communication unit 173. Therefore, a user of the wearable device can use the data processed by the display device 100 through the wearable device.

The display unit 180 can convert image signals, data signals, or on-screen display (OSD) signals, which are processed in the control unit 170, or images signals or data signals, which are received in the external device interface unit 135, into R, G, and B signals to generate driving signals.

Furthermore, the display device 100 shown in Fig. 1 is just one embodiment of the present disclosure and thus, some of the components shown can be integrated, added, or omitted according to the specification of the actually implemented display device 100.

That is, if necessary, two or more components can be integrated into one component, or one component can be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 can receive images through the network interface unit 133 or the external device interface unit 135 and play them without including the tuner 131 and the demodulation unit 132.

For example, the display device 100 can be divided into an image processing device such as a set-top box for receiving broadcast signals or contents according to various network services and a content playback device for playing content input from the image processing device.

In this case, an operating method of a display device according to an embodiment of the present disclosure described below can be performed by one of the display device described with reference to Fig. 1, an image processing device such as the separated set-top box, and a content playback device including the display unit 180 and the audio output unit 185.

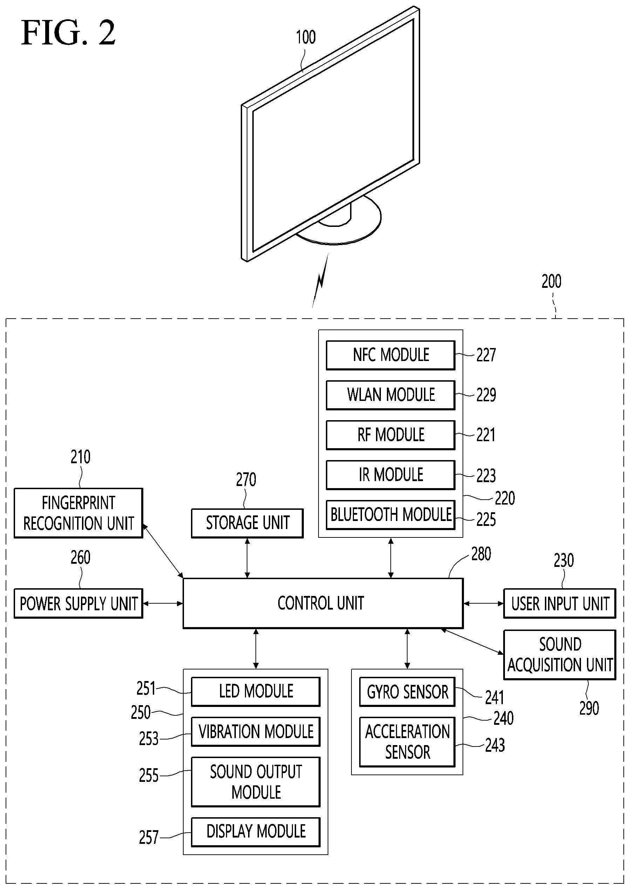

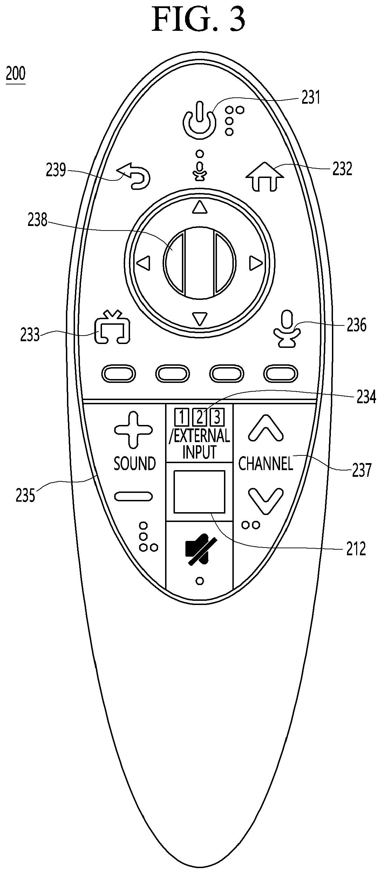

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 can include a fingerprint recognition unit 210, a wireless communication unit 220, a user input unit 230, a sensor unit 240, an output unit 250, a power supply unit 260, a storage unit 270, a control unit 280, and a sound acquisition unit 290.

Referring to Fig. 2, the wireless communication unit 225 transmits/receives signals to/from an arbitrary any one of display devices according to the above-mentioned embodiments of the present disclosure.

The remote control device 200 can include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 can include a Bluetooth module 225 capable of transmitting or receiving signals to or from the display device 100 according to a Bluetooth communication standard. In addition, the remote control device 200 can include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 can transmit signals containing information on the movement of the remote control device 200 to the display device 100 through the wireless communication unit 220.

Moreover, the remote control device 200 can receive signals transmitted from the display device 100 through the RF module 221 and if necessary, can transmit a command for power on/off, channel change, and volume change to the display device 100 through the IR module 223.

The user input unit 230 can be configured with a keypad, a button, a touch pad, or a touch screen. A user can operate the user input unit 230 to input a command relating to the display device 100 to the remote control device 200. If the user input unit 230 includes a hard key button, a user can input a command relating to the display device 100 to the remote control device 200 through the push operation of the hard key button. This will be described with reference to Fig. 3.

Referring to Fig. 3, the remote control device 200 can include a plurality of buttons. The plurality of buttons can include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 can be a button for recognizing a user's fingerprint. According to an embodiment of the present disclosure, the fingerprint recognition button 212 can perform a push operation and receive a push operation and a fingerprint recognition operation. The power button 231 can be a button for turning on/off the power of the display device 100. The home button 232 can be a button for moving to the home screen of the display device 100. The live button 233 can be a button for displaying live broadcast programs. The external input button 234 can be a button for receiving an external input connected to the display device 100. The volume control button 235 can be a button for controlling a volume output from the display device 100. The voice recognition button 236 can be a button for receiving user's voice and recognizing the received voice. The channel change button 237 can be a button for receiving broadcast signals of a specific broadcast channel. The OK button 238 can be a button for selecting a specific function, and the back button 239 can be a button for returning to a previous screen.

Fig. 2 is described again.

If the user input unit 230 includes a touch screen, a user can touch a soft key of the touch screen to input a command relating to the display device 100 to the remote control device 200. In addition, the user input unit 230 can include various kinds of input interfaces operable by a user, for example, a scroll key and a jog key, and this embodiment does not limit the scope of the present disclosure.

The sensor unit 240 can include a gyro sensor 241 or an acceleration sensor 243. The gyro sensor 241 can sense information on the movement of the remote control device 200.

For example, the gyro sensor 241 can sense information on an operation of the remote control device 200 on the basis of x, y, and z axes and the acceleration sensor 243 can sense information on a movement speed of the remote control device 200. Moreover, the remote control device 200 can further include a distance measurement sensor that senses a distance with respect to the display unit 180 of the display device 100.

The output unit 250 can output image or voice signals in response to the operation of the user input unit 235, or can output image or voice signals corresponding to signals transmitted from the display device 100. A user can recognize whether the user input unit 235 is operated or the display device 100 is controlled through the output unit 250.

For example, the output unit 250 can include an LED module 251 for flashing, a vibration module 253 for generating vibration, a sound output module 255 for outputting sound, or a display module 257 for outputting an image, if the user input unit 235 is manipulated or signals are transmitted/received to/from the display device 100 through the wireless communication unit 225.

Additionally, the power supply unit 260 supplies power to the remote control device 200 and if the remote control device 200 does not move for a predetermined time, stops the power supply, so that power waste can be reduced. The power supply unit 260 can resume the supply of power if a predetermined key provided at the remote control device 200 is operated.

The storage unit 270 can store various kinds of programs and application data required to control or operate the remote control device 200. If the remote control device 200 transmits/receives signals wirelessly through the display device 100 and the RF module 221, the remote control device 200 and the display device 100 transmits/receives signals through a predetermined frequency band.

The control unit 280 of the remote control device 200 can store, in the storage unit 270, information on a frequency band for transmitting/receiving signals to/from the display device 100 paired with the remote control device 200 and refer to it.

The control unit 280 controls general matters relating to the control of the remote control device 200. The control unit 280 can transmit a signal corresponding to a predetermined key operation of the user input unit 235 or a signal corresponding to the movement of the remote control device 200 sensed by the sensor unit 240 to the display device 100 through the wireless communication unit 225.

In addition, the sound acquisition unit 290 of the remote control device 200 can acquire voice.

The sound acquisition unit 290 can include at least one microphone and acquire voice through the microphone.

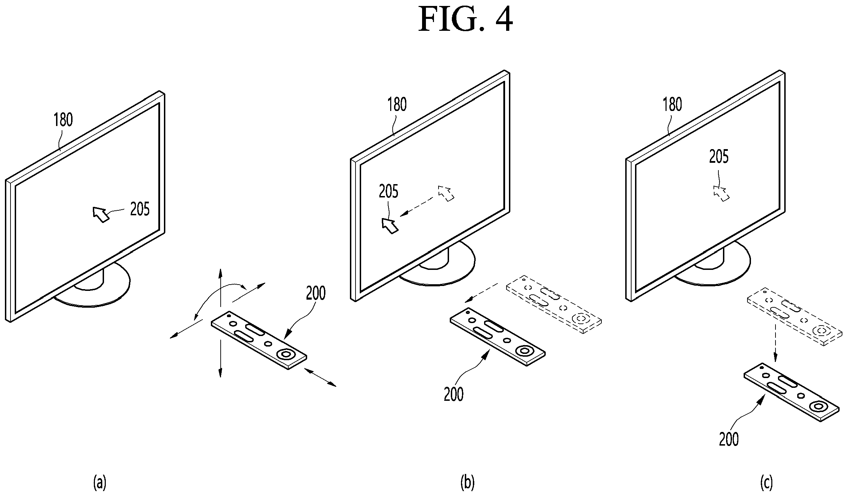

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display unit 180.

A user can move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as show in the drawing, the remote control device 200 can be referred to as a spatial remote control device.

Fig. 4(b) illustrates that if a user moves the remote control device 200, the pointer 205 displayed on the display unit 180 of the display device 100 is moved to the left according to the movement of the remote control device 200.

Information on a movement of the remote control device 200 detected through a sensor of the remote control device 200 is transmitted to the display device 100. The display device 100 can calculate the coordinates of the pointer 205 from the information on the movement of the remote control device 200. The display device 100 can display the pointer 205 to match the calculated coordinates.

Fig. 4(c) illustrates that while a specific button in the remote control device 200 is pressed, a user moves the remote control device 200 away from the display unit 180. Thus, a selected region in the display unit 180 corresponding to the pointer 205 can be zoomed in and displayed in an enlarged size.

On the other hand, if a user moves the remote control device 200 close to the display unit 180, a selection area in the display unit 180 corresponding to the pointer 205 can be zoomed out and displayed in a reduced size.

On the other hand, if the remote control device 200 is moved away from the display unit 180, a selection area can be zoomed out and if the remote control device 200 is moved closer to the display unit 180, a selection area can be zoomed in.

Additionally, if a specific button in the remote control device 200 is pressed, recognition of a vertical or horizontal movement can be excluded. That is, if the remote control device 200 is moved away from or closer to the display unit 180, the up, down, left, or right movement cannot be recognized and only the back and forth movement can be recognized. While a specific button in the remote control device 200 is not pressed, only the pointer 205 is moved according to the up, down, left or right movement of the remote control device 200.

Moreover, the moving speed or moving direction of the pointer 205 can correspond to the moving speed or moving direction of the remote control device 200.

Furthermore, a pointer in this specification means an object displayed on the display unit 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 can be displayed in correspondence to one point of a horizontal axis and a vertical axis on the display unit 180 and also can be displayed in correspondence to a plurality of points such as a line and a surface.

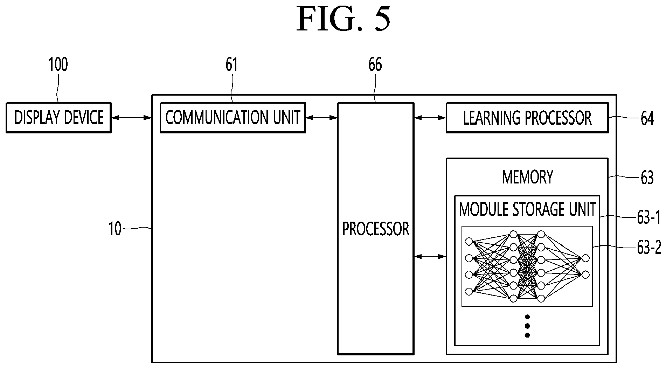

Fig. 5 is a block diagram for describing a configuration of an artificial intelligence (AI) server according to an embodiment of the present disclosure.

Referring to Fig. 5, the AI server 10 can refer to a device that learns an artificial neural network by using a machine learning algorithm or uses a learned artificial neural network.

The AI server 10 can be configured with a plurality of servers to perform distributed processing, and can be defined as a 5G network. In this case, the AI server 10 can be included as a part of the display device 100 to perform at least a part of AI processing together.

The AI server 10 can include a communication unit 61, a memory 63, a learning processor 64, and a processor 66.

The communication unit 61 can transmit or receive data to or from an external device such as the display device 100.

The memory 63 can include a model storage unit 63-1. The model storage unit 63-1 can store a model (or an artificial neural network 63-2) that is being learned or is learned through the learning processor 64.

The learning processor 64 can learn the artificial neural network 63-2 by using training data. The learning model can be used while being mounted on the AI server 10 of the artificial neural network, or can be used while being mounted on the external device such as the display device 100.

The learning model can be implemented as hardware, software, or a combination of hardware and software. When all or part of the learning model is implemented as software, one or more instructions constituting the learning model can be stored in the memory 63.

The processor 66 can infer a result value for new input data by using the learning model and generate a response or a control command based on the inferred result value.

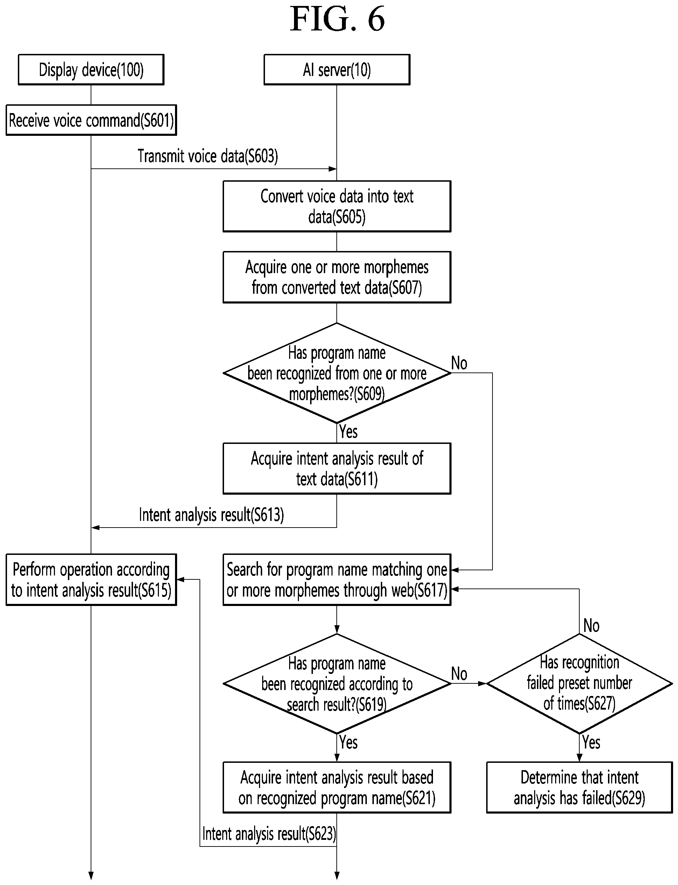

Fig. 6 is a ladder diagram for describing an operating method of a voice recognition system according to an embodiment of the present disclosure.

**The** voice recognition system can include the display device 100 and the AI server 10.

The control unit 170 of the display device 100 receives a voice command uttered by a user (S601).

As another example, the control unit 170 can receive a voice command through a microphone (not shown) provided in the display device 100.

As another example, the control unit 170 can receive, from the remote control device 200, the voice command received by the remote control device 200.

The control unit 170 of the display device 100 transmits voice data corresponding to the received voice command to the AI server 10 through the network interface unit 133 (S603).

The control unit 170 can convert a voice signal corresponding to the received voice command into voice data. The control unit 170 can generate voice data by removing a noise signal from the voice signal.

The processor 66 of the AI server 10 converts the received voice data into text data (S605).

The processor 66 can convert the voice data into text data by using a speech to text (STT) engine.

The processor 66 of the AI server 10 acquires one or more morphemes from the converted text data (S607).

The processor 66 can acquire one or more morphemes from text data by using a natural language processing (NLP) model.

The NLP model can be a model for identifying a speaker's intent through text data and determining the operation of the display device 100 according to the identified intent.

The NLP model can be an artificial neural network-based model that is supervised-learned by a deep learning algorithm or a machine learning algorithm.

The NLP model can be stored in the model storage unit 63-1 of the memory 63.

**The** NLP model can be provided in the form of hardware or software.

The NLP model will be described below in detail.

The processor 66 can extract one or more morphemes constituting the text data by using the NLP model. The extracted morphemes can be an named entity or a word.

The processor 66 of the AI server 10 determines, from the one or more morphemes, whether the program name has been recognized (S609).

The processor 66 can search for the program name matching the extracted one or more morphemes through a program name database.

The program database can include titles of programs provided from a plurality of content providers. The program database can include the full name of each program.

The program database can be stored in the memory 63, or can be provided separately from the AI server 10.

When the program name matching the one or more morphemes exists in the program name database, the processor 66 can determine that the program name is recognized.

When the program name matching the one or more morphemes does not exist through the program name database, the processor 66 can determine not that the program name is not recognized.

When the program name is recognized, the processor 66 of the AI server 10 acquires an intent analysis result of the text data (S611).

The processor 66 can use the NLP model to analyze the program name and the text other than the program name to acquire an intent analysis result.

The intent analysis result can include the intent of the text data and an operation command for requesting a specific operation of the display device 100 according to the intent of the text data.

The processor 66 of the AI server 10 transmits the intent analysis result to the display device 100 through the communication unit 61 (S613).

The display device 100 performs an operation according to the intent analysis result received from the AI server 10 (S615).

For example, when the intent analysis result indicates a search for a specific program, the display device 100 can perform an action to search for the corresponding program.

On the other hand, when the program name is not recognized from the one or more morphemes, the processor 66 of the AI server 10 searches for the program name matching the one or more morphemes through a web (S617).

When the program name matching the one or more morphemes does not exist in program name database, the processor 66 can determine not that the program name is not recognized.

When the program name is not recognized, the processor 66 can search for the program name matching the one or more morphemes through a website.

The processor 66 can access one or more web servers and search for the program name matching one or more morphemes.

The processor 66 of the AI server 10 determines whether the program name is recognized through the search result (S619).

When the program name matching the morpheme is found through the search result using the web, the processor 66 can determine that the program name has been recognized.

When the program name is recognized, the processor 66 of the AI server 10 acquires the intent analysis result of the text data based on the recognized program name (S621).

The processor 66 can use the NLP model to analyze the intent of the text data by using the program name and text other than the text corresponding to the program name.

The intent analysis result of the text data can be acquired according to the intent analysis.

The intent analysis result can include the intent of the text data and an operation command for requesting a specific operation of the display device 100 according to the intent of the text data.

The processor 66 of the AI server 10 transmits the intent analysis result to the display device 100 through the communication unit 61 (S623).

The control unit 170 of the display device 100 performs an operation according to the intent analysis result received from the AI server 10 (S615).

When the program name is not recognized according to the search result, the processor 66 of the AI server 10 determines whether the recognition of the program name has failed a preset number of times (S627).

The processor 66 can count the number of times the program name is not recognized according to the search result through the web. The preset number of times can be the number of times that the program name matching the morpheme is not recognized according to the search through the web.

The preset number of times is 5, but this is only an example.

When the recognition of the program name fails a preset number of times, the processor 66 of the AI server 10 determines that the intent analysis of the text data has failed (S629).

When it is determined that the intent analysis has failed, the processor 66 can transmit a notification indicating that the intent analysis has failed to the display device 100 through the communication unit 61.

The display device 100 can output a notification indicating the intent analysis failure received from the AI server 10.

That is, in response to the voice command uttered by the user, the display device 100 can output a notification indicating that the intent analysis of the voice command has failed through the display unit 180 or the audio output unit 185.

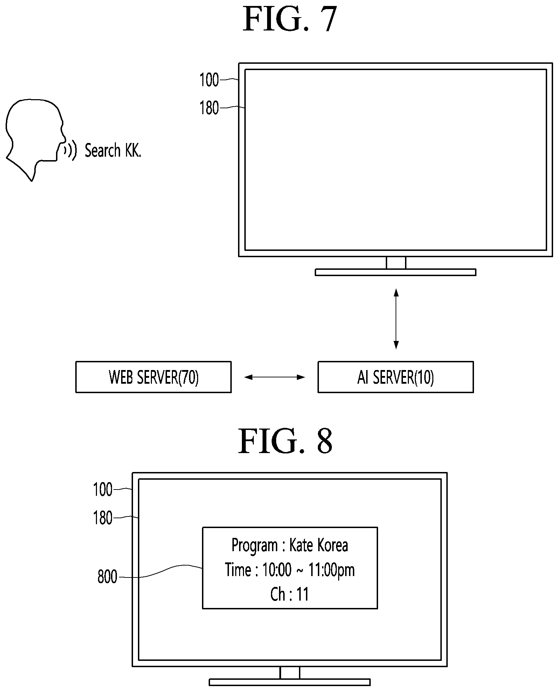

Figs. 7 and 8 are views for describing the process of recognizing the program name from the voice command uttered by the user and performing the intent analysis result of the voice command, according to an embodiment of the present disclosure.

In Figs. 7 and 8, it is assumed that the user has uttered the voice command <search KK> for program search.

<KK> can correspond to the abbreviation or alias of the program. The actual program name is <Kate Korea>.

The display device 100 can transmit, to the AI server 10, voice data corresponding to the voice command uttered by the user.

The AI server 10 can convert voice data into text data and acquire one or more morphemes from the converted text data.

The morpheme can be a predefined word or named entity.

In the example of Fig. 7, the morphemes can be <search> and <KK>. <search> can be an named entity indicating a specific action of the display device 100, and <KK> can be an named entity indicating an abbreviation or alias of a program name.

The NLP model of the AI server 10 can analyze the morpheme <search> as the intent of searching for content.

The AI server 10 can determine whether the program name matching <KK> exists.

The AI server 10 can search the program name database to determine whether the program name matching <KK> exists.

When the program name matching <KK> is not found in the program name database, the AI server 10 can search for the text corresponding to <KK> through the web.

The AI server 10 can access one or more web servers 70 and search whether the program name matching the text corresponding to <KK> exists.

When the program name matching the text corresponding to <KK> is found as <Kate Korea>, the AI server 10 can determine that the program name has been recognized.

The AI server 10 can finally determine that the intent corresponding to the user's voice command is to search for content having the program name <Kate Korea >.

The AI server 10 can transmit, to the display device 100, a result of analyzing the intent to search for content having the program name <Kate Korea>.

The display device 100 can receive the intent analysis result from the AI server 10 and search for the program <Kate Korea>.

Accordingly, the display device 100 can display a search result 800 of the program <Kate Korea> on the display unit 180 as shown in Fig. 8.

The search result 800 can include information about the program, such as a program broadcast time and channel.

According to an embodiment of the present disclosure, the abbreviations and aliases that are not generally recognized are recognized, so that the recognition rate of the user's spoken words can be greatly improved.

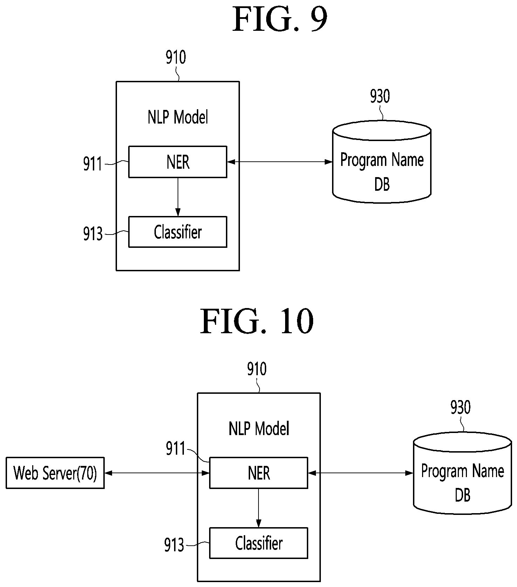

Figs. 9 and 10 are views for describing the operation of the NLP model according to an embodiment of the present disclosure.

Fig. 9 is a view for describing the operation of the NLP model when the full name of the program is included in the text data of the voice command uttered by the user, and Fig. 10 is a view for describing the operation of the NLP model when the abbreviation or alias of the program is included in the text data of the voice command uttered by the user.

Referring to Figs. 9 and 10, the NLP model 910 can include a named entity recognition (NER) 911 and a classifier 913.

The NLP model 910 can be included in the processor 66 of the AI server 10.

As another example, the NLP model 910 can be loaded in the storage unit 140 of the display device 100.

The NLP model 910 can be a model for learning a natural language that is supervised-learned through a deep learning algorithm or a machine learning algorithm.

The NER 911 can extract a predefined word or named entity from text data.

The NER 911 can recognize the part-of-speech of the extracted word or named entity.

The classifier 913 can analyze or classify the utterance intent of the voice command from the extracted word or named entity.

The NER 911 can search the program name database 930 to recognize the program name matching the morpheme included in the text data.

The program name database 930 can store a plurality of program names corresponding to a plurality of programs acquired from a plurality of content providers.

The program name database 930 can be stored in the memory 63 of the AI server 10, or can be provided separately from the AI server 10.

When the program name matching the morpheme is found from the program name database 930, the NER 911 can determine that the corresponding program name has been recognized.

On the other hand, when the program name matching the morpheme is not found from the program name database 930, the NER 911 can search through the web server 70 whether the program name matching the text corresponding to the morpheme exists.

The NER 911 can search for the program name by using a web crawling technique.

Web crawling can be a technique for extracting desired information from a web document composed of a standard such as HTML.

When the program name matching the morpheme is found through web crawling, the NER 911 can acquire the found program name.

The classifier 913 can perform intent analysis based on the acquired program name and morphemes other than the morpheme used for search.

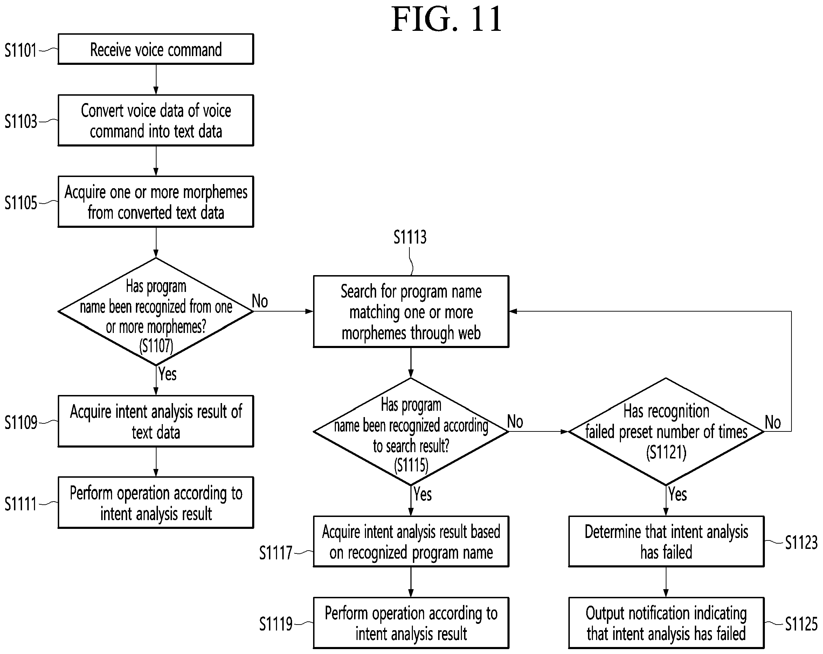

Next, Fig. 11 is described.

Fig. 11 is a flowchart for describing the operating method of the display device according to an embodiment of the present disclosure.

In particular, Fig. 11 is a view for describing the process of recognizing the program name when the NLP model 910 described with reference to Fig. 10 is mounted on the control unit 170 or the storage unit 140 of the display device 100.

Referring to Fig. 11, the control unit 170 of the display device 100 receives a voice command uttered by a user (S1101).

The control unit 170 of the display device 100 converts voice data corresponding to the voice command into text data (S1103).

The control unit 170 can convert the voice data into text data by using an STT engine.

The control unit 170 of the display device 100 acquires one or more morphemes from the converted text data (S1105).

The control unit 170 can acquire one or more morphemes from text data by using the NER 911 included in the NLP model 910.

The extracted morphemes can be an named entity or a word.

The NLP model 910 can be a model mounted on the storage unit 140 or the control unit 170.

The control unit 170 of the display device 100 determines, from the one or more morphemes, whether the program name has been recognized (S1107).

The control unit 170 can search for the program name matching the extracted one or more morphemes through the program name database 930. The program name database 930 can be loaded in the storage unit 140.

The program database 930 can include titles of programs provided from a plurality of content providers. The program database can include the full name of each program.

When the program name is recognized, the control unit 170 of the display device 100 acquires an intent analysis result of the text data (S1109).

The control unit 170 can use the NLP 910 to analyze the program name and the text other than the program name to acquire an intent analysis result.

The intent analysis result can include the intent of the text data and an operation command for requesting a specific operation of the display device 100 according to the intent of the text data.

The control unit 170 of the display device 100 performs an operation according to the acquired intent analysis result (S1111).

On the other hand, when the program name is not recognized from the one or more morphemes, the control unit 170 of the display device 100 searches for the program name matching the one or more morphemes through a web (S1113).

The control unit 170 can search for a website or a web document to search for the program name matching the morpheme.

The control unit 170 of the display device 100 determines whether the program name is recognized through the search result (S1115).

The control unit 170 can access the web server 70 and determine that the program name has been recognized when the program name matching the morpheme is found through the search result using the web.

When the program name is recognized, the control unit 170 of the display device 100 acquires the intent analysis result of the text data based on the recognized program name (S1117).

The control unit 170 of the display device 100 performs an operation according to the acquired intent analysis result (S1119).

When the program name is not recognized according to the search result, the control unit 170 of the display device 100 determines whether the recognition of the program name has failed a preset number of times (S1121).

When the recognition of the program name fails a preset number of times, the control unit 170 of the display device 100 determines that the intent analysis of the text data has failed (S1123).

The control unit 170 of the display device 100 outputs a notification indicating that the intent analysis of the voice command has failed (S1125).

In response to the voice command uttered by the user, the display device 100 can output a notification indicating that the intent analysis of the voice command has failed through the display unit 180 or the audio output unit 185.

According to an embodiment of the present disclosure, the above-described method can be implemented with codes readable by a processor on a medium in which a program is recorded. Examples of the medium readable by the processor include a ROM, a RAM, a CD-ROM, a magnetic tape, a floppy disk, an optical data storage device, and the like, and can include those implemented in the form of carrier wave (for example, transmission over Internet).

The display device described above is not limitedly applicable to the configuration and method of the above-described embodiments, and the embodiments are configured by selectively combining all or part of each of the embodiments such that various modifications can be made.

## Claims

1. An artificial intelligence server comprising:
a communication unit configured to perform communication with a display device;
a database configured to store a plurality of program names; and
a processor configured to:
receive, from the display device, voice data corresponding to a voice command uttered by a user;
convert the received voice data into text data;
acquire a plurality of named entities from the converted text data;
determine whether a program name matching one of the plurality of named entities among the plurality of program names stored in the database exists; and
when the program name matching the named entity does not exist, search for the program name matching the named entity through a web.

2. The artificial intelligence server of claim 1, wherein
the processor is configured to acquire an intent analysis result of the text data based on the found program name and named entities other than the named entity.

3. The artificial intelligence server of claim 2, wherein the processor is configured to transmit the acquired intent analysis result to the display device through the communication unit, and wherein the intent analysis result includes an operation command for controlling an operation of the display device.

4. The artificial intelligence server of claim 1, wherein the processor is configured to determine that the intent analysis of the voice command has failed when the program name matching the named entity is not recognized more than a preset number of times.

5. The artificial intelligence server of claim 4, wherein the processor is configured to transmit a notification indicating that the intent analysis has failed to the display device through the communication unit.

6. The artificial intelligence server of claim 1, wherein the text data includes a first named entity indicating a specific action of the display device and a second named entity indicating an abbreviation or alias of the program name.

7. The artificial intelligence server of claim 1, wherein the processor includes a natural language processing model for determining the intent of the voice command and determining an operation of the display device, and
wherein the natural language processing model includes:
a named entity recognition configured to extract the plurality of named entities from the text data and determine whether one of the plurality of extracted named entities matches the plurality of program names stored in the database; and
a classifier configured to analyze the intent of the text data.

8. An operating method of an artificial intelligence server, the operating method comprising:
storing a plurality of program names in a database;
receiving, from a display device, voice data corresponding to a voice command uttered by a user;
converting the received voice data into text data;
acquiring a plurality of named entities from the converted text data;
determining whether a program name matching one of the plurality of named entities exists among the plurality of program names stored in the database; and
when the program name matching the named entity does not exist, searching for the program name matching the named entity through a web.

9. The operating method of claim 8, further comprising acquiring an intent analysis result of the text data based on the found program name and named entities other than the named entity.

10. The operating method of claim 9, further comprising transmitting the acquired intent analysis result to the display device,
wherein the intent analysis result includes an operation command for controlling an operation of the display device.

11. The operating method of claim 8, further comprising determining that the intent analysis of the voice command has failed when the program name matching the named entity is not recognized more than a preset number of times.

12. The operating method of claim 11, further comprising transmitting a notification indicating that the intent analysis has failed to the display device through a communication unit.

13. The operating method of claim 8, wherein the text data includes a first named entity indicating a specific action of the display device and a second named entity indicating an abbreviation or alias of the program name.

14. The operating method of claim 8, wherein an artificial intelligence server includes a natural language processing model for determining the intent of the voice command and determining an operation of the display device, and
wherein the natural language processing model includes:
a named entity recognition configured to extract the plurality of named entities from the text data and determine whether one of the plurality of extracted named entities matches the plurality of program names stored in the database; and
a classifier configured to analyze the intent of the text data.
